# EUROPEAN PATENT APPLICATION

(11) **EP 2 560 419 A1**
(43) Date of publication of application: **20.02.2013**
(21) Application number: 12004979.6
(22) Date of filing: 05.07.2012
(51) Int. Cl.: H04W 8/00, G06Q 30/00

(54) **Grouping method for group-buying based on wireless communication protocol**

(30) Priority: 05.07.2011 US 201161504317 P; 02.05.2012 US 201213461790
(71) Applicant: HTC Corporation, Taoyuan County 330 (TW)
(72) Inventor: Chen, Li-Hui, Taoyuan County 330 (TW); Liu, Te-Chuan, Taoyuan County 330 (TW); Jan, Cheng-Shiun, Taoyuan County 330 (TW); Lin, Jen-Chiun, Taoyuan County 330 (TW)
(74) Representative: Wagner & Geyer

(57) **Abstract**

When a customer who encounters a specific type of merchandise he/she wants by accident, he/she is able to use his/her wireless mobile device to ask for agreements from mobile electronic devices of neighboring people who want the same type of merchandise and to group his/her mobile electronic device with mobile electronic devices of people who respond with agreements, where the mobile electronic devices are grouped by using a wireless communication protocol. With the aid of grouping those people who want the specific type of merchandise, a group-buying action can be initiated, and a discount of the specific type of merchandise can be retrieved by the grouped people.

## Description

### Cross Reference To Related Applications

This application claims priority of US Provisional No. 61/504, 317 filed on July 4, 2011.

### Background of the Invention

### 1. Field of the Invention

The present invention relates to a grouping method for group-buying, and more particularly, to a grouping method for performing group-buying action based on a wireless communication protocol.

### 2. Description of the Prior Art

Most market stores are willing to offer a lower price, i.e. offering a discount, for a specific type of merchandise when customers attempt to buy a larger quantity of this specific type of merchandise. Customers also learn to group together for buying this specific type merchandise they want with a discount.

However, grouping enough customers is no easy task, especially when one customer encounters a specific type of merchandise he/she wants by accident but is bothered by the high price of the specific type of merchandise. If it happens that there are enough nearby customer wanting the same type of merchandise, grouping together with the enough number of nearby customers could be a better way for this customer to buy the specific type of merchandise with a discount.

### Summary of the Invention

The claimed invention discloses a grouping method for group-buying based on a wireless communication protocol. The grouping method comprises activating a wireless communication protocol on a first mobile electronic device for activating a grouping function provided by the wireless communication protocol to initiate a group-buying action to buy a specific type of merchandise; broadcasting an polling signal carrying information related to the grouping function; confirming, by the first mobile electronic device, whether there is a first plurality of second mobile electronic devices utilizing the wireless communication protocol by receiving a response signal from each of the first plurality of second mobile electronic devices, where the response signal is in response to the polling signal; and grouping the first mobile electronic device with a second plurality of the second mobile electronic devices out of the first plurality of the second mobile electronic devices when a number of the second plurality of mobile electronic devices responding to the first mobile electronic device with an agreement to buy the specific type of merchandise is greater than or equal to a least number of people required to initiate a group-buying action of buying the specific type of merchandise.

The claimed invention discloses a non-transitory machine readable media. The non-transitory machine readable media comprises a first computer code, a second computer code, a third computer code, and a fourth computer code. When the first computer code is executed by a processor, the first computer code is configured to activate a wireless communication protocol on a first mobile electronic device for activating a grouping function provided by the wireless communication protocol to initiate a group-buying action to buy a specific type of merchandise. When the second computer code is executed by the processor, the second computer code is configured to broadcast a polling signal carrying information related to the grouping function. When the third computer code is executed by the processor, the third computer code is configured to confirm whether there is a first plurality of second mobile electronic devices utilizing the wireless communication protocol by receiving a response signal from each of the first plurality of second mobile electronic devices, where the response signal is in response to the polling signal. When the fourth computer code is executed by the processor, the fourth computer code is configured to group the first mobile electronic device with a second plurality of the second mobile electronic devices out of the first plurality of the second mobile electronic devices when a number of the second plurality of mobile electronic devices responding to the first mobile electronic device with an agreement to buy the specific type of merchandise is greater than or equal to a least number of people required to initiate a group-buying action of buying the specific type of merchandise.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is utilized for helping explaining how a grouping method disclosed in the present invention works between mobile electronic devices of potential buyers according to one embodiment of the present invention.
FIG. 2 and FIG. 3 illustrate a flowchart of the grouping method of the present invention for group-buying based on a wireless communication protocol according to one embodiment of the present invention.

### Detailed Description

The present invention discloses a grouping method of group-buying based on a wireless communication protocol. The purpose of the grouping method is to facilitate a customer, who encounters a specific type of merchandise he/she wants by accident and is eager to immediately group enough nearby customers who also want the same type of merchandise, by using a wireless communication protocol. Note that the wireless communication protocols utilized in the present invention may be based on wireless technologies including at least inter alia, Bluetooth, WiFi, WiFi direct, near field communication, or peer-to-peer communication.

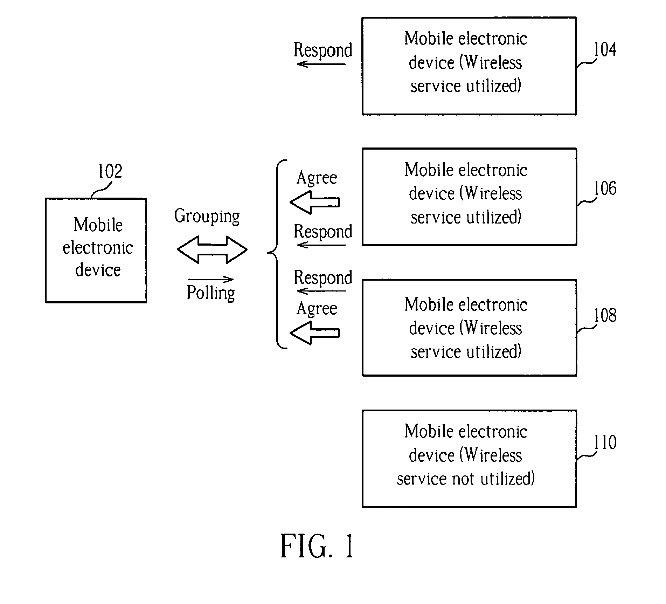

Please refer to FIG. 1, which is utilized for helping explaining how the grouping method works between mobile electronic devices of potential buyers according to one embodiment of the present invention. In FIG. 1, a mobile electronic device 102 of a user intending to initiate a group-buying action is assumed to be installed with a wireless communication protocol for executing a grouping function based on the disclosed grouping method of the present invention and supported by the wireless communication protocol. A plurality of mobile electronic devices 104, 106, 108 and 110 are assumed to be located within a maximal range for responding to the mobile electronic device 102, i.e., within its proximity. The mobile electronic devices 104,106 and 108 are assumed to utilize the wireless communication protocol. The mobile electronic device 110 is assumed to not utilize the wireless communication protocol.

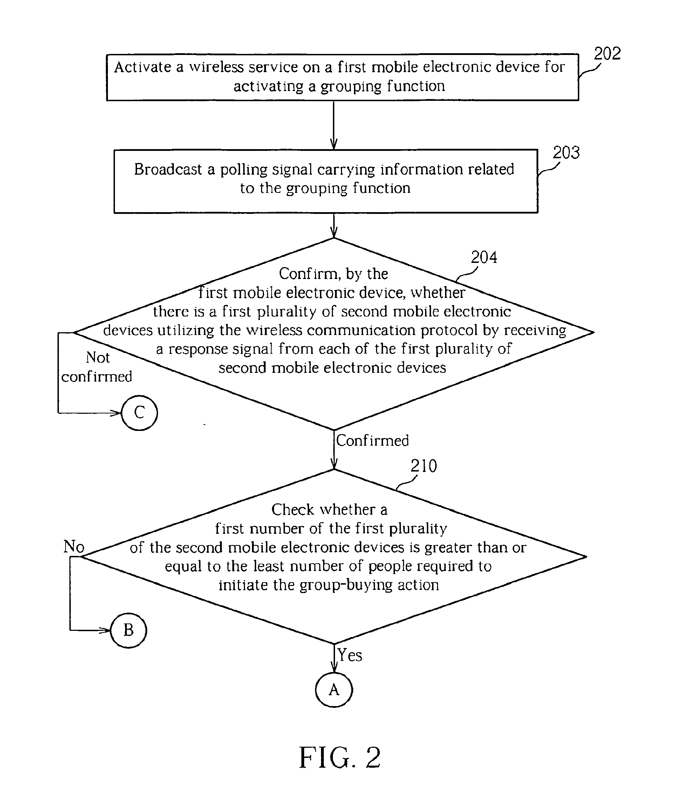

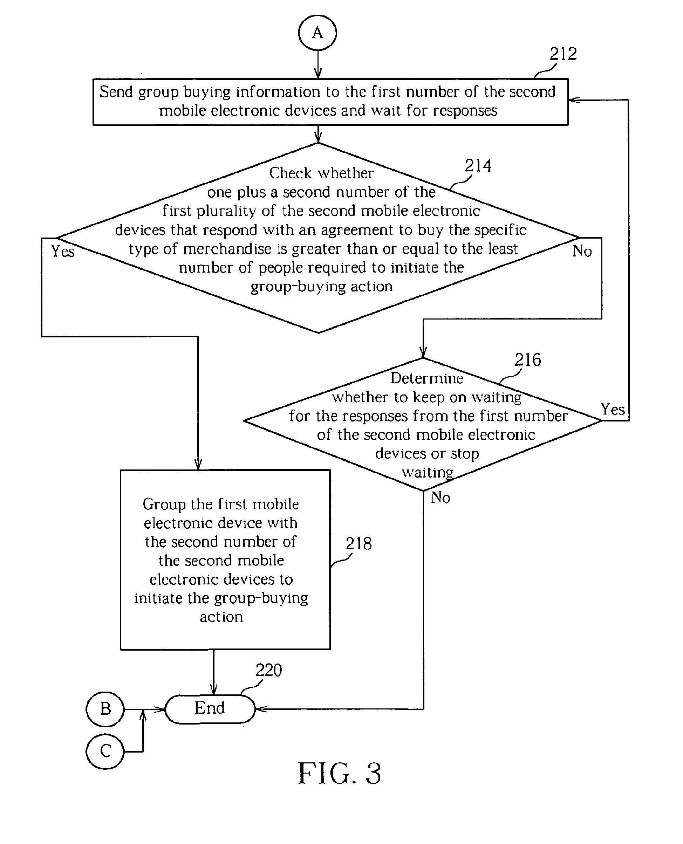

Please refer to FIG. 2 and FIG. 3, which disclose the grouping method of group purchasing according to one embodiment of the present invention, where the disclosed grouping method can be utilized by part of mobile electronic devices shown in FIG. 1.

The disclosed grouping method includes steps as follows:
- Step 202:: Activate a wireless communication protocol on a first mobile electronic device for activating a grouping function provided by the wireless communication protocol to initiate a group-buying action to buy a specific type of merchandise, and go to Step 204.
- Step 203:: Broadcast a polling signal carrying information related to the grouping function, and go to Step 204.
- Step 204:: Confirm, by the first mobile electronic device, whether there is a first plurality of second mobile electronic devices utilizing the wireless communication protocol by receiving a response signal from each of the first plurality of second mobile electronic devices, where the response signal is in response to the polling signal; when the first plurality of second mobile electronic devices is confirmed, go to Step 210; else, go to Step 220.
- Step 210:: Check whether a first number of the first plurality of the second mobile electronic devices is greater than or equal to the least number of people required to initiate the group-buying action; when the first number is greater than or equal to the least number of people required to initiate the group-buying action, go to Step 212; else, go to Step 220.
- Step 212:: Send group buying information to the first number of the second mobile electronic devices and wait for responses from the first number of the second mobile electronic devices.
- Step 214:: Check whether one plus a second number of the first plurality of the second mobile electronic devices that respond with an agreement to buy the specific type of merchandise is greater than or equal to the least number of people required to initiate the group-buying action; when the second number is greater than or equal to the least number of people required to initiate the group-buying action, go to Step 218; else, go to Step 216.
- Step 216:: Determine whether to keep on waiting for the responses from the first number of the second mobile electronic devices or stop waiting; if it is determined to keep on waiting, go to Step 212; if it is determined to stop waiting, go to Step 220.
- Step 218:: Group the first mobile electronic device with the second number of the second mobile electronic devices to initiate the group-buying action, and go to Step 220.
- Step 220:: End.

How the steps shown in FIG. 2 and FIG. 3 work will be explained with the aid of the mobile electronic devices 102, 104, 106, 108 and 110 shown in FIG. 1. The first mobile electronic device mentioned in the steps shown in FIG. 2 and FIG. 3 indicates the mobile electronic device 102 shown in FIG. 1. The second mobile electronic devices mentioned in the steps shown in FIG. 2 AND FIG. 3 may include the mobile electronic device 104, 106 and 108.

The user of the mobile electronic device 102 may encounter a specific type of merchandise he/she wants by accident while walking on streets so that the user is motivated to gather enough people to issue a group-buying action to buy the specific type of merchandise with a discounted price. In Step 202, the wireless communication protocol is activated on the mobile electronic device 102 by the user so that the grouping function supported by the wireless communication protocol can also be activated.

In Step 203, the mobile electronic device 102 broadcasts a polling signal, carrying information related to the grouping function, for receiving response signals in response to the polling signal in Step 204, where the response signals are sent by other mobile electronic devices utilizing the wireless communication protocol. As a result, the mobile electronic devices 104, 106 and 108 will respond to the mobile electronic device 102 by sending the response signals since the wireless communication protocol is utilized on the mobile electronic devices 104, 106, and 108, whereas the mobile electronic device 110 will respond to the mobile electronic device 102 since the wireless communication protocol is not utilized on the mobile electronic device 110.

In Step 204, the mobile electronic device 102 confirms that the wireless communication protocol is utilized by the mobile electronic devices 104, 106 and 108 by receiving the response signals respectively.

In Step 210, the mobile electronic device 102 checks whether a first number of mobile electronic devices found in Step 204 with the wireless communication protocol being utilized, i.e. the mobile electronic devices 104, 106 and 108, is larger than or equal to a least number of people required to initiate the group-buying action, where the first number is currently equals to three. As an example, the least number of people required to initiate the group-buying action may be two. Since there are three mobile electronic devices 104, 106 and 108 utilizing the wireless communication protocol, i.e. when the first number is greater than the least number of people required to initiate the group-buying action, the check in Step 210 can be passed, and the execution flow then goes to Step 212. Otherwise, when the first number is smaller than the least number of people required to initiate the group-buying action, the execution flow goes to Step 220 so that the mobile electronic device 102 stops the grouping function.

In Step 212, the mobile electronic device 102 sends group-buying information about the specific type of merchandise as a group-buying request to the mobile electronic devices 104, 106 and 108 and waits for responses from the mobile electronic devices 104, 106 and 108. Therefore, users of the mobile electronic devices 104, 106 and 108 may respond to the mobile electronic device 102 about the group-buying information to indicate respective wills to join the group-buying action. In one embodiment of the present invention, the group-buying information may include an authentication code and a service identity of the grouping function so that the users of the mobile electronic devices 104, 106 and 108 may recognize the grouping function via the service identity of the grouping function, join the group-buying action by granting the authentication code, and return an agreement to the mobile electronic device 102 according to the action of granting the authentication code.

In Step 214, the mobile electronic device 102 checks the returned agreements from the mobile electronic devices 104, 106 and 108 for confirming agreements of joining the group-buying action from the users of the mobile electronic devices 104, 106 and 108. Assume the mobile electronic device 102 receives agreements from the mobile electronic devices 106 and 108, then the second number mentioned in Step 214 equals to two. Since one plus the second number, which indicates the mobile electronic device 102 plus the second number of mobile electronic devices 106 and 108, is currently larger than or equal to the least number of people required to initiate the group-buying action, where the least number is assumed to be equal to two by following the above-mentioned example, it means that the user of the mobile electronic device 102 has found enough people to initiate the group-buying action, and the execution flow will go to Step 218; else, it means that the user of the mobile electronic device 102 has not found enough people to initiate the group-buying action so that the execution flow will go to Step 216.

In Step 216, the mobile electronic device 102 may determine to keep on waiting for responses from mobile electronic devices that have not respond to the mobile electronic device 102 or stop waiting, according to a waiting time for reply and a confidence value set by the mobile electronic device 102. When it is determined to keep on waiting, the execution flow goes back to Step 212. When it is determined to stop waiting, the execution flow goes to Step 220. The mechanism of waiting for the responses may also be utilized in Step 212.

In one embodiment of the present invention, within a predetermined duration, a loop including Step 212, Step 214, and Step 216 is periodically repeated. Therefore, when Step 212 is repeated, the group buying information may be kept on being sent to those who have not responded with an agreement to buy the specific type of merchandise before expiration of the predetermined duration, or before declinations from all those people who have not responded with the agreement are received by the mobile electronic device 102. The predetermined duration and whether to wait for all the declinations or not can be set on the mobile electronic device 102 by its user as an external input.

In Step 218, since there are enough agreements to initiate the group-buying action for the specific type of merchandise, the mobile electronic device 102 groups the mobile electronic device 102 with the mobile electronic devices 106 and 108 responding with agreements so as to initiate the group-buying action for buying the specific type of merchandise with a discount.

In one embodiment of the present invention, Step 212, Step 214, Step 216 and Step 218 can be performed by using a pairing program of the grouping function, which is supported by the wireless communication protocol utilized on the mobile electronic device 102.

The present invention discloses a grouping method of group-buying based on a wireless communication protocol. With the aid of the grouping method of the present invention, when a customer who encounters a specific type of merchandise he/she wants by accident, he/she is able to ask for agreements from neighboring people who want the same type of merchandise by using a wireless communication protocol and to group himself/herself with people who respond with agreements by using the wireless communication protocol. After grouping, a group-buying action can be initiated, and a discount of the specific type of merchandise can be retrieved by the grouped people.

A non-transitory machine readable media may be utilized for storing computer codes programmed according to the grouping method of the present invention, such as the grouping method disclosed in FIGs. 1-3, so that the stored computer codes may be run by a processor of any kind of mobile electronic device to fulfill the purpose of the present invention.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A grouping method for group-buying based on a wireless communication protocol, comprising:
activating a wireless communication protocol on a first mobile electronic device for activating a grouping function provided by the wireless communication protocol to initiate a group-buying action to buy a specific type of merchandise;
broadcasting a polling signal carrying information related to the grouping function;
confirming, by the first mobile electronic device, whether there is a first plurality of second mobile electronic devices utilizing the wireless communication protocol by receiving a response signal from each of the first plurality of second mobile electronic devices, wherein the response signal is in response to the polling signal; and
grouping the first mobile electronic device with a second plurality of the second mobile electronic devices out of the first plurality of the second mobile electronic devices when a number of the second plurality of mobile electronic devices responding to the first mobile electronic device with an agreement to buy the specific type of merchandise is greater than or equal to a least number of people required to initiate a group-buying action of buying the specific type of merchandise.

2. The grouping method of claim 1 wherein grouping the first mobile electronic device with the second plurality of the second mobile electronic devices comprises:
checking whether a first number of the first plurality of the second mobile electronic devices is greater than or equal to the least number of people required to initiate the group-buying action;
sending group-buying information to the first plurality of the second mobile electronic devices when the first number is greater than or equal to the least number of people required to initiate the group-buying action; and
checking whether one plus a second number of the first plurality of the second mobile electronic devices that respond to the group-buying information with the agreement to buy the specific type of merchandise is greater than or equal to the least number of people required to initiate the group-buying action.

3. The grouping method of claim 2 further comprising:
running a paring program included by the grouping function;
wherein sending the group-buying information to the first plurality of the second mobile electronic devices comprises sending the group-buying information to the first plurality of the second mobile electronic devices by the pairing program; and
wherein grouping the first mobile electronic device with the second plurality of the second mobile electronic devices comprises grouping the first mobile electronic device with the second plurality of the second mobile electronic devices by the pairing program.

4. The grouping method of claim 3 wherein a maximum waiting time for reply or a confidence value is utilized by the pairing program when the first mobile electronic device waits for responses from the first plurality of the second mobile electronic devices.

5. The grouping method of claim 2 wherein the group-buying information comprises a service identity of the grouping function and an authentication code to be granted by the first plurality of the second mobile electronic devices.

6. The grouping method of claim 1 wherein the wireless communication protocol is provided by using Bluetooth, WiFi, WiFi direct, near field communication, or peer-to-peer communication.

7. The grouping method of claim 1 wherein the agreement comprises a service identity of the grouping function.

8. The grouping method of claim 7 further comprising performing authentication on the second plurality of the second mobile electronic devices so that the wireless communication protocol can be activated on the second plurality of the second mobile electronic devices.

9. The grouping method of claim 7 wherein grouping the first mobile electronic device with the second plurality of the second mobile electronic devices comprises:
grouping the first mobile electronic device with the second plurality of the second mobile electronic devices according to the service identity of the grouping function.

10. The grouping method of claim 1 wherein grouping the first mobile electronic device with the second plurality of the second mobile electronic devices comprises:
checking whether one plus a first number of the first plurality of the second mobile electronic devices is greater than or equal to the least number of people required to initiate the group-buying action;
sending group-buying information to the first plurality of the second mobile electronic devices when the first number is greater than or equal to the least number of people required to initiate the group-buying action; and
checking whether a second number of the first plurality of the second mobile electronic devices that respond with the agreement to buy the specific type of merchandise is greater than or equal to the least number of people required to initiate the group-buying action.

11. The grouping method of claim 10 wherein the group-buying information comprises an authentication code to be granted by the first plurality of the second mobile electronic devices.

12. The grouping method of claim 10 further comprising:
running a paring program included by the grouping function;
wherein sending the group-buying information to the first plurality of the second mobile electronic devices comprises sending the group-buying information to the first plurality of the second mobile electronic devices by the pairing program; and
wherein grouping the first mobile electronic device with the second plurality of the second mobile electronic devices comprises grouping the first mobile electronic device with the second plurality of the second mobile electronic devices by the pairing program.

13. The grouping method of claim 12 wherein a maximum waiting time for reply or a confidence value is utilized by the pairing program when the first mobile electronic device waits for responses from the first plurality of the second mobile electronic devices.

14. The grouping method of claim 10, wherein sending the group-buying information to the first plurality of the second mobile electronic devices when the first number is greater than or equal to the least number of people required to initiate the group-buying action comprises:
periodically repeating sending the group-buying information to the first plurality of the second mobile electronic devices when the first number is greater than or equal to the least number of people required to initiate the group-buying action within a predetermined duration,
the method preferably further comprising:
setting the predetermined duration according to an external input of the first mobile electronic device.

15. The grouping method of claim 10, wherein sending the group-buying information to the first plurality of the second mobile electronic devices when the first number is greater than or equal to the least number of people required to initiate the group-buying action comprises:
periodically repeating sending the group-buying information to the first plurality of the second mobile electronic devices when the first number is greater than or equal to the least number of people required to initiate the group-buying action and before declinations from remainder of the first plurality of the second mobile electronic devices which have not responded with the agreement are received by the first mobile electronic device,
the method preferably further comprising:
setting whether to wait for all the declinations from the remainder of the first plurality of the second mobile electronic devices according to an external input of the first mobile electronic device.
